# EUROPEAN PATENT APPLICATION

(11) **EP 3 109 090 A1**
(43) Date of publication of application: **28.12.2016**
(21) Application number: 14883245.4
(22) Date of filing: 20.02.2014
(51) Int. Cl.: B60L 11/18, B60W 20/00, B60L 15/20, H02J 7/14, H02J 7/34, H02P 6/00

(54) **SMART ENERGY MANAGEMENT SYSTEMS FOR ELECTRIC AND HYBRID ELECTRIC VEHICLES WITH BIDIRECTIONAL CONNECTION, SMART ENERGY MANAGEMENT SYSTEM FOR AN ENERGY GENERATOR, METHOD FOR MANAGING ENERGY IN A SMART ENERGY MANAGEMENT SYSTEM AND METHOD FOR CONTROLLING THE OPERATION OF AN ENERGY GENERATOR**

(71) Applicant: COORDENAÇÃO DOS PROGRAMAS DE PÓS GRADUAÇÃO DE ENGENHARIA DA UNIVERSIDADE FEDERAL DO RIO DE JANEIRO, 21941-972 Rio de Janeiro - RJ (BR); TRACEL VEÍCULOS ELÉTRICOS LTDA, 20040-918 Rio de Janeiro RJ (BR)
(72) Inventor: DE MIRANDA, Paulo, Emilio, Valadão, 22280-030 Rio de Janeiro - RJ (BR); CARREIRA, Edvaldo, da Silva, 21920-095 Rio de Janeiro - RJ (BR)
(74) Representative: Awapatent AB
(86) International application number: PCT/BR2014/000054
(87) International publication number: WO 2015/123737

(57) **Abstract**

The present invention relates to a smart energy management system for vehicles that are totally electric (1) or electro-hybrid (2), that prioritizes the regeneration of kinetic energy into electric energy, comprised by a main energy control unit (3) with adaptive control to improve the efficiency with subsequent travel on a specific route, embedded energy storage system (4), two-way charger for normal or occasional recharging of the vehicle (5), or for supplying electric energy to an external consumer, with converters for the auxiliary system (6), and remote operation control and servicing capability, use of a device with touch-sensitive screen (57) and with availability of on-board power sockets for recharging personal devices. The present invention also relates to a smart energy management system for energy generator (22, 23, 24, 25, 69, 84) for the distributed generation of electric energy in a non-embedded mode, as well as a method used to manage energy in these systems and a method for controlling the operation of an energy generator (22, 23, 24, 25 25, 69, 84).

## Description

### Technical Field

The present invention relates to a smart energy management system for vehicles that are all electric or electro-hybrid, hereinafter referred to as electric traction system, and prioritizes the regeneration of kinetic energy into electric energy. The electric traction system presents an assembly configuration predominantly in the embedded electric energy storage wherein emphasis is placed on the regeneration of kinetic energy into electric energy. A smart energy management system for an energy generator for generating electric energy in a non-embedded mode is also disclosed in the present invention, as well as the method used to manage energy in these systems and the method for controlling the operation of an energy generator.

### Description of the State of the Art

Today, there are several versions of electric and hybrid vehicles, including, for example, configurations based on the use of electric motors or compositions with internal combustion engines, used for traction (as is done conventionally) or for generating electric energy aboard the vehicle, optionally having pre-mains connection for recharging the embedded storage system. As an example, the following models are mentioned:
(a) Hybrid vehicle with traction shared between the internal combustion engine and electric motor, comprising the following configurations:
   (a.i) with embedded support system for storing electric energy, not enough to ensure its long haul autonomous operation;
   (a.ii) with embedded support system for storing mechanical or mechanical and electric energy, not enough to ensure its long haul autonomous operation;
   (a.iii) with pre-mains connection for the configurations described in (a.i) and (a.ii).
(b) Hybrid vehicle with traction shared between the internal combustion engine and electric motor, having an embedded electric energy converter and which uses internal combustion engine for this purpose, comprising the following configurations:
   (b.i) with embedded support system for storing electric energy, not enough to ensure its long haul autonomous operation;
   (b.ii) with embedded support system for storing mechanical or mechanical and electric energy, not enough to ensure its long haul autonomous operation;
   (b.iii) with pre-mains connection for the configurations presented in (b.i) or (b.ii).
(c) Hybrid vehicle with traction shared between the internal combustion motor and electric motor, with embedded electric energy converter and which does not use the internal combustion engine for this purpose, and may use other types of converters, such as fuel cell, solar power converter, among others, comprising the following configurations:
   (c.i) with embedded support system for storing electric energy, not enough to ensure its long haul autonomous operation;
   (c.ii) with embedded support system for storing mechanical or mechanical and electric energy, not enough to ensure its long haul autonomous operation;
   (c.iii) with pre-mains connection for the configurations presented in (c.i) or (c.ii).
(d) Hybrid vehicle, with electric traction, having an embedded electric energy converter and which uses an internal combustion engine for this purpose, comprising the following configurations:
   (d.i) with embedded support system for storing electric energy, not enough to ensure its long haul autonomous operation;
   (d.ii) with embedded support system for storing mechanical or mechanical and electric energy, not enough to ensure its long haul autonomous operation;
   (d.iii) with pre-mains connection for the configurations presented in (d.i) or (d.ii).
(e) Hybrid vehicle, with electric traction, having an embedded electric energy converter and which does not use the internal combustion engine for this purpose, and may use other types of converters, such as fuel cell, solar power converter, among others, comprising the following configurations:
   (e.i) with embedded support system for storing electric energy, not enough to ensure its long haul autonomous operation;
   (e.ii) with embedded support system for storing mechanical or mechanical and electric energy, not enough to ensure its long haul autonomous operation;
   (e.iii) with embedded electric, mechanical or mechanical and electric energy storage system capable of enabling the autonomous operation of the vehicle, with autonomy compatible with its application;
   (e.iv) with pre-mains connection for the configurations presented in (e.i), (e.ii) or (e.iii).
(f) Electric vehicle with electric traction, with pre-mains connection and which does not have an on-board energy generation system, and may optionally comprise an embedded support system for storing mechanical energy.

The term vehicle applied herein mainly, but not limitedly, relates to land transport means, there being known examples, already commercialized or as development prototypes.

Although the vehicles described above provide advantages to conventional motorizations, chiefly in terms of fuel economy and lesser environmental impact, they still have limitations.

The main restriction normally associated to electric vehicles, item (f) above, is the low autonomy, which often fails to satisfy the demand for use due to the high weight and cost of the embedded energy storage system required. Conventional hybrid vehicles, items (a) to (c) above, remain wholly or partially dependent on the use of internal combustion engines for vehicle traction. This characteristic keeps said vehicle configurations limited to inherently inefficient equipment, since it is limited to the Carnot cycle and normally uses fossil fuels.

The vehicles described in item (d) provide the advantage of having electric traction. Electric traction is silent, non-pollutant and very efficient, even considering that it uses an embedded electric energy converter based on internal combustion engines. In this case, the overall efficiency increases and the level of emissions decreases compared with the more conventional versions.

Pre-mains connection adds more technological and economy value, and also enables them to act as stationary generators of electric energy to satisfy local demands in a distributed manner.

The vehicle configurations described in item (e) display a major technological step forward, show lesser environmental impact in their life cycle, but have the limitation of the manufacturing cost, which is higher in such cases.

Among the types of vehicles presented in item (e), emphasis is placed upon the one comprising the characteristics described in (e.iii) and (e.iv). This modality was underexploited in commercial terms, and there is clearly an open field of hybridization options to be looked into.

North American document US2011/0190968 A1 discloses an approach to the efficient operating control of a hybrid car with electric traction and pre-mains connection for recharging the batteries of the energy storage system aboard the vehicle. The proposed control unit is based on the control of the load status (LS) of the embedded batteries, imposing operating conditions on the car due to the LS. However, this is done under specific limit conditions of the LS, characterized as: LS continuously decreasing; maintenance of LS at minimum and approximately constant level; maintenance of LS at variable level and near to maximum; maintenance of LS at maximum and constant level. This approach becomes limited when considering the operation with the embedded energy storage system at a minimum LS level, which contributes to early wear, reduction in useful life and efficiency losses. It is also noted that it refers to a control system for electric traction of the load-follower type, in which the conversion unit of embedded energy operates to meet the transient energy consumption demands of the vehicle.

Document US 5.924.505 has an approach focused on the drivability control of an electro-hybrid vehicle. However, the document does not present a proposition that indicates efficient control of the energy on board. On the contrary, it considers dissipating excess energy from regeneration in the form of thermal energy in dissipation resistors, with major energy wastage.

Document US 6.708.789 B1 considers a hybrid system of electric traction in which the largest percentage of energy required for the operation originates at any moment from the converter on board, the embedded electric energy storage system being used as support element solely to meet the peak demand for load. Electrical resistors are also used to dissipate excess energy from regeneration in the form of thermal energy. The North American documents US 5.924.505 and US 6.708.789 B1 do not exploit the improvement in operating energy efficiency of the vehicle.

The North American document US 8.138.720 B2 discloses the control of two energy store systems simultaneously, one being of rapid energy absorption and the other for long-term storage for application in a system of uninterrupted energy supply, in electric vehicles, in electric hybrid vehicles and in electric hybrid vehicles with pre-mains connection. Although these are considered possible configurations for on board energy generation systems, they are limited to the control of two storage sources, and do not consider the management of the system in an efficient manner.

North American document US 2006/0250902 presents several configurations in series and in parallel for use with internal combustion engine or other equipment to generate electricity, such as a fuel cell. However, the document does not address the management of energy on board with the objective of increasing energy efficiency and the reduction of fuel consumption.

Document US 7.740.092 B2 discloses the control of electric hybrid vehicles with more than one source of energy storage on board, one of them being necessarily with capacity for quick absorption of energy. The document is limited to systems with more than one source of energy on board and the regeneration of kinetic energy into electric energy and the maximization of efficiency in the use of the embedded energy are not considered.

Based on the teachings of document US 2009/0229900 A1, it is noted that personal vehicles are normally used for carriage for only 4% of the time, and can offer the remaining 96% of the time for other functions.

Thus, this document proposes that an electro-hybrid vehicle with pre-mains connection acts as a source and as a reservoir of energy, and can be used autonomously for distributed generation of electric energy, not connected to the mains, as part of a local micro-network, or to connect to the general power grid, especially during times of peak electricity consumption. In that document, special consideration is given to the modes of connection of the vehicle to supply energy and not exactly the modes of use of the vehicle for transport.

The North American document US 8.140.204 B2 and the European document EP 1.256.476 B1 address a hybrid vehicle system with an internal combustion engine in parallel, with pre-mains connection, designed to prioritize the use of electrical motorization, preserving the use of the internal combustion engine only when really necessary.

Thus, it improves the fuel utilization efficiency in the vehicle. The hybrid vehicles are only considered in parallel configuration.

Finally, the North American document US 2012/0112693 A1 discloses the physical integration configuration of various components of an electro-hybrid system of traction vehicle series, containing several converters and computer, especially to control the electrical recharge of the embedded energy storage system. This document does not consider the maximization of energy efficiency in operating the vehicle, the focus being concentrated on the recharge system based on external energy sources.

As a solution to the problems of the state of the art mentioned previously, the present invention considers electric vehicles with two-way connection for recharging and supplying electric energy, with low consumption of energy suitable for operation. Emphasis is placed on the regeneration of kinetic energy into electric energy and in the optimized management of the embedded energy, ensuring greater autonomy. The present invention also relates to hybrid vehicles with emphasis on the embedded energy storage system. To assure the feasibility of said solutions, electro-electronic equipment was designed and operationalized that interchanges power and information streams such as, for example, a main energy control unit and a converter combination of the auxiliary system.

### Brief Description of the Invention

The present invention relates to a smart energy management system for an electric vehicle with two-way connection comprising: an electric traction motor connected to a traction converter to traction the electric vehicle; a traction converter connected to sensors for controlling drive and drivability of the electric vehicle, which controls the electric traction motor by an algorithm for regenerating kinetic energy into electric energy; an embedded energy storage system for storing the electric energy on-board the electric vehicle; a two-way charger which, via an interface, recharges the embedded electric energy storage system and supplies electric energy to a network or non-embedded energy consumer system; a converter combination of the auxiliary system comprising a plurality of converters of the auxiliary system of the electric vehicle; and an electric busbar that performs electrical-electronic connections with: the embedded energy storage system, the two-way charger, the converter combination of the auxiliary system and the traction converter; wherein the electric busbar has a busbar protection and monitoring system which is responsible for protecting the busbar electric system, ensuring operation safety, and data sensing for control. The smart energy management system for electric vehicle with two-way connection further comprises a main energy control unit (MECU) to control, monitor, retrieve data, perform communication and manage the energy on board the electric vehicle, wherein the MECU provides a stream of information and control between a plurality of elements of the system and their respective interfaces and wherein emphasis is placed on the regeneration of kinetic energy into electric energy, ensuring optimized stream of power generated by the electric traction motor and managing the load status of the energy storage system.

The present invention also relates to a smart energy management system for electro-hybrid vehicle with two-way connection comprising: the smart energy management system for electric vehicle with two-way connection as defined previously; at least an embedded electric energy generator for generating electric energy in accordance with the system's consumption requirements; and an energy converter for controlling the operation of at least an embedded electric energy generator in stationary status based on the exchange of information stream and control between an intelligence and an interface for energy converter, wherein the use of the energy storage system is predominant in relation to the total energy required for operating the system for electro-hybrid vehicle with two-way connection, representing over 50% of the total embedded energy.

A method for managing energy in a smart energy management system is also addressed in the present invention. This method comprises the steps of monitoring, by way of the MECU, the instantaneous operating conditions of the system and the real-time information of some of its subsystems; storing the real-time information on the MECU through the adaptive control, performed by the MECU (3) by monitoring of the load status of the energy storage system (4), based on historical consumption; and determining, by way of the MECU and from the information stored therein, the power and energy streams by way of the busbar to the different energy consumer subsystems and storers on board the system, in order to prevent an electric energy generator from attending to situations of direct demands from the energy consumer subsystems, operating in approximately constant power to satisfy the operating conditions of best energy efficiency of the generator.

Further, the present invention relates to a method for controlling the operation of an energy generator, comprising the steps of: detecting, by way of a main energy control unit (MECU), and based on the load consumption pattern of a consumer subsystem, at least one of the load decay status of the storage system continuously followed by cyclic stabilization of this load status and the controlled decay; and providing, through an energy converter operating in conditions of best energy efficiency, that the energy generator start the operation on an increasing power ramp to achieve and remain at a pre-established power level, wherein this level is kept approximately constant and wherein the operation has a duration that is calculated based on the real average energy consumption and on the instantaneous load status of the embedded energy storage system.

### Brief Description of the Drawings

The present invention will now be described with reference to a preferred embodiment illustrated in the accompanying drawings, wherein:
Figure 1 - a shematic representation of the electric traction system for electric or hybrid vehicles with two-way connection to the mains and emphasis on the energy efficiency of the present invention;
Figure 2 - a schematic representation of the electric traction system for electric vehicles with two-way connection to the mains and emphasis on the energy efficiency of the present invention;
Figure 3 - a schematic representation system for monitoring and controlling the on-board energy storage devices for the electric traction system for electric and electro-hybrid vehicles of the present invention;
Figure 4 - a schematic representation of power sockets for personal devices in electric and hybrid-electric vehicles of the present invention;
Figure 5 - a schematic representation of the main energy control unit of the present invention;
Figure 6 - a schematic representation of the control and monitoring by use of an interface with touch-sensitive screen in an electric traction system for electric and electro-hybrid vehicles of the present invention;
Figure 7 - a schematic representation of the central control, monitoring and remote servicing in real time for an electric traction system for electric and electro-hybrid vehicles of the present invention;
Figure 8 - a schematic representation of the control for the configuration of an electric traction system for electro-hybrid vehicle with energy converter according to efficiency of the present invention;
Figure 9 - a schematic representation of the electric traction system for an electro-hybrid vehicle with the fuel cell of the present invention;
Figure 10 - a detailed schematic representation of the electric traction system for an electro-hybrid vehicle with the fuel cell of the present invention;
Figure 11 - a schematic representation of the embedded storage system and distribution of hydrogen and physical disposition of fuel cells with details of powering the reagents and reject of reaction products of the present invention;
Figure 12 - a schematic representation of the electric traction system for electro-hybrid vehicle with generator of the energy converter type, according to the efficiency with motor-generator group of the present invention;
Figure 13 - a schematic representation of the generator of the energy converter type according to efficiency with group motor-generator for embedded use in an electric traction system for an electro-hybrid vehicle and for autonomous use in the stationary generation of electric energy of the present invention;
Figure 14 - a schematic representation of the controller converter for generator of the energy converter type according to efficiency with motor-generator group of the present invention;
Figure 15 - shows a schematic representation of the control strategy of the electric traction system for electro-hybrid vehicle with energy converter according to efficiency of the present invention, typical example with generator of the fuel cell type;
Figure 16 - shows a schematic representation of the control strategy of the electric traction system for electro-hybrid vehicle with energy converter according to efficiency, typical example with generator of the energy converter type with motor-generator group for different fuels of the present invention; and
Figure 17 - shows a schematic representation of the smart energy management system for a non-embedded energy generator with two-way connection to the mains and use of energy converter according to the efficiency of the present invention.

### Detailed Description of the Drawings

The present invention solves the problems presented in the state of the art by means of different configurations of vehicles with electric traction. Priority is given to the efficiency in the use of energy and the consequent economy of the system with reduced environmental impact and increased autonomy.

This is achieved by giving emphasis to the regeneration of kinetic energy into electric energy and to the optimization of embedded energy management.

Accordingly, the concept of electro-hybrid vehicle was developed, focusing on the energy storage system on board, with operation of the energy sources in best efficiency condition, as a consequence of optimizing of the on-board energy hybridization engineering. This predominance of the energy storage system on board consists of the use of an energy storage system with high storage capacity, exceeding 50% of the embedded energy, meaning most of the energy used for powering the vehicle comes from this storage system. This provides for the use of smaller-scale energy generators in relation to existing hybrid vehicles.

This vehicle configuration uses the concept previously set forth in item (e.iii), that is, a hybrid vehicle, with electric traction having an embedded electric energy converter which uses an internal combustion engine for this purpose. It is also possible to use other types of converters, such as fuel cell and solar power converter. This vehicle configuration further comprises an embedded electric, mechanical, or electric and mechanical energy storage system capable of enabling the autonomous operation of the vehicle, with autonomy compatible with its application and preferably having pre-mains connection.

In the present invention, vehicle is understood to be a means of land transport of persons or load, such as a bus, truck, utility vehicle, car, motorbike, electric bicycle, tractor, fork-lift truck, support car for sports activities, train, trolleybus, tram and cable car, or water transport, such as a ship, boat, yacht, ferry-boat, barge and submarine, or air transport, such as a plane, helicopter, airship and vehicles for use in space.

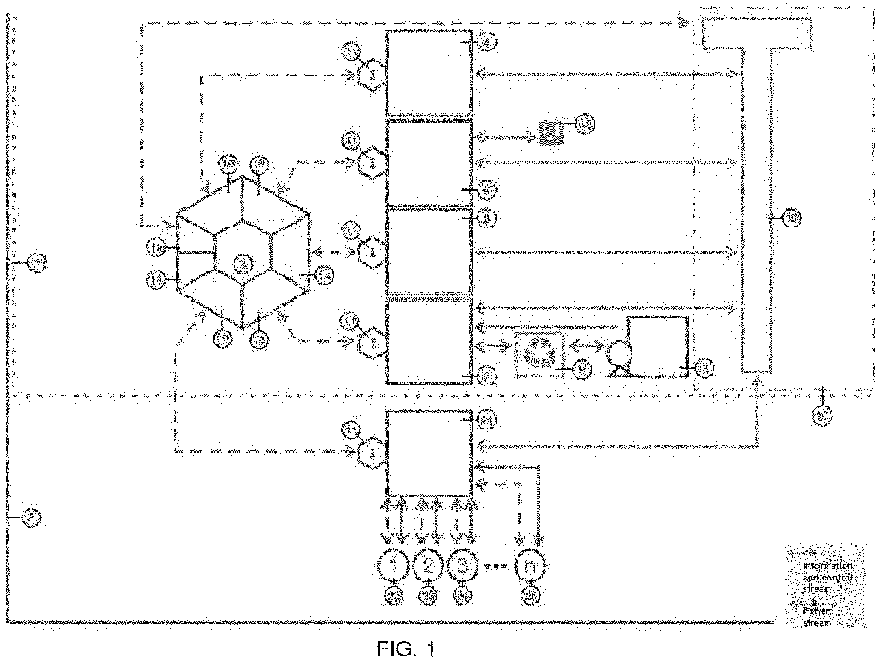

Figure 1 shows a preferred schematic representation of the electric traction system for electric vehicle with two-way connection (VECon) 1 and of the electric traction system for electro-hybrid vehicle with two-way connection (VEHCon) 2. Two-way connection is understood to be the vehicle's ability to connect to the mains for recharging or for supplying energy to an external consumer.

The electric traction system for electric vehicle with two-way connection 1 is composed of a main energy control unit (MECU) 3, which is responsible for the control, monitoring, data retrieval, communication and management of the energy on board. The MECU 3 has physical connection to the various subsystems of the vehicle's traction and auxiliary systems, including: an embedded energy storage system 4; a two-way charger 5; a converter combination of the auxiliary system 6; and a traction converter 7, which controls an electric traction motor 8, capable of promoting the regeneration of kinetic energy into electric energy by the algorithm 9. The algorithm 9 is integrated to the intelligence 11 of the traction converter 7 in braking processes and deceleration.

Subsystems 4, 5, 6 and 7 of the vehicle's traction and auxiliary systems are physically connected to an electric busbar 10. The subsystems 4, 5, 6 and 7 have two-way power stream with the busbar 10 and are endowed with intelligence 11, which is comprised of microcontrolled electronic circuits which have embedded control and monitoring computer programs, being responsible for the local control and communication with the MECU 3.

The two-way charger 5 transfers conventional mains energy via the interface 12 to the vehicle in the recharging process of its embedded energy storage system 4 and also transfers electric energy of the vehicle to an external load to supply energy to an external consumer.

The interface 12 provides a recharge mode of the embedded electric energy storage system 4, the connection being with or without physical electrical contact, with 'fast charge' characteristics, whereby characterizing a system called "opportunity recharging".

Opportunity recharging comprises a partial electrical recharge of the electric energy storage system 4 of the vehicle at specific temporary stopping points along its normal operation route, using automated quick recharge systems.

The MECU 3 works by the implementation and control of information streams with various subsystems of the vehicle's traction and auxiliary systems. This electro-electronic equipment contains robust and safe control algorithms for managing the energy on board, according to the operation condition in greater efficiency in use and storage of the embedded energy and allowing control, operation and remote servicing. The MECU 3 seeks and imposes control parameters for operating under best efficiency conditions, determining the magnitude of the power generated on board on an on-going basis, the generation time and the load status of the energy storage system 4 which triggers or interrupts the embedded generation.

Additionally, the MECU 3 has intelligence with a fast serial communication board, ensuring robust communication, resistant to electro-magnetic noise. These electronic architecture characteristics enable the optimization of hybridization engineering of the energy on board and the performance of adaptive operating control of the vehicle, represented by the dynamic storage of operating information and the smart processing thereof, with the aim of reducing the overall energy expenditure of the vehicle in subsequent travel cycles.

The MECU 3 has specific interfaces connected to the information and control flow with the smart means 11.

Thus, the MECU 3 is associated to the traction converter 7 via the interface for traction converter (MECU-CT) 13, to the converter combination of the auxiliary system 6 via the interface to the converter combination of the auxiliary system (MECU-CCSA) 14, to the two-way charger 5 via the interface for two-way charger (MECU-CBD) 15, to the energy storage system 4 via the interface to the energy storage system (MECU-AE) 16, to the busbar protection and monitoring system 17 via the interface to the busbar protection monitoring system (MECU-PMB) 18 and to devices associated to the drivability of the vehicle, such as accelerator, brake, accelerometers, dynamic position locator, and to internal and external communications to the vehicle through the man-machine interface (MECU-IHM) 19.

The MECU 3 also has an interface which can be used for connection to the intelligence of an energy conversion unit, characterized as the interface for energy converter (MECU-CE) 20.

Figure 1 also shows a preferred schematic representation of the electric traction system for electro-hybrid vehicle with two-way connection 2 which has intelligence 11, having the information and control flow with the interface for energy converter 20.

The system also has an energy converter according to efficiency (CESE) 21 which establishes two-way power stream with the busbar 10 and allows associated operation with different embedded energy generators 22, 23, 24 and 25, with which it has two-way power streams, as well as information and control. The converter 21 stands out from conventional converters by imposing operation under best energy efficiency conditions.

As can be seen in Figure 1, the embedded energy generators 22 to 25 are numbered in sequence up to n to indicate the various possibilities of types of energy generators which can be used in electric hybrid vehicles.

The electric traction system for electric vehicle with two-way connection 1 has specifics for its electric traction and its auxiliary system, the latter comprising the energy requirements of the vehicle not directly associated to traction. These specifics include:
(1) topology and the form of dynamic communication between the main equipment such as, for example, the MECU 3;
(2) the MECU 3 displays intelligence with a fast serial communication board, ensuring robust communication, resistant to electro-magnetic noise, and robust and safe control algorithms for managing the energy on board, according to the operation condition in greater efficiency in use and storage of the embedded energy and allowing control, operation and remote servicing.
   Using the man-machine interface 19 of the MECU 3, it is possible to use a device with tablet-like touch-sensitive screen, which enables starting and stopping the vehicle, recognizing the driver, starting and stopping devices of the vehicle's traction and auxiliary systems, providing dynamic operation information of the vehicle, such as load status of the energy storage system 4, speed and geographical position of the vehicle by GPS (Global Positioning System), instantaneous power expended in the vehicle, consumption currents and regeneration of kinetic energy into electric energy and screen to adjust variables and maintenance;
(3) in the electrical and/or mechanical energy storage system 4 with high power and energy capabilities: the maximization of the electric energy absorption regenerated with braking or deceleration of the vehicle through the efficient use of the algorithm 9 integrated to the intelligence 11 of the traction converter 7. The maximization of electric energy absorption is ensured by the MECU (3), which allows the busbar (10) the immediate use of a portion of electric energy regenerated to supply the load requirements of the auxiliary system and performs an adaptive control by monitoring the load status of the energy storage system 4, based on historical consumption;
(4) in the two-way charger 5: the compatibility of the equipment designed, endowed with intelligence 11 that ensures the recharging process is suited to the dynamic operating characteristics of the vehicle, with a view to lowering energy losses, and which also ensures the stream of energy in accordance with the conventional mains standards, when in the energy supply process to an external consumer;
(5) in the converter combination of the auxiliary system 6: the capacity to generate multiple associated converters, endowed with embedded smart means, ensuring the efficient use of energy in each of the subsystems of the auxiliary system of the vehicle. This is achieved through interaction of the converter 6 with the MECU 3, by using its adaptive control. Further in this converter 6, there is a direct and alternating current converter with the objective of providing in various places of the cabin of the vehicle powers sockets of two standard types, for conventional electric connection 54 and 15 for connection of the USB 55 type, designed for the use of personal devices;
(6) in the traction converter 7: the presence of intelligence 11, which uses specific logics interface for traction converter 13 and the busbar 10 to ensure the stream of energy required by the operation of the electric traction motor 8 to satisfy the torque and power requirements for the use of the vehicle, enabling the MECU 3 to perform the adaptive control to optimize the energy expenditure in subsequent cycles using the same route. Moreover, this same intelligence 11 uses the algorithm 9 for managing the joint operation of the interfaces for traction converter 13 and for the energy storage system 16, ensuring the fast and efficient storage of electric energy in the energy storage system 4, which originates from the electric traction motor operation 8 the electric energy generator during braking processes or deceleration of the vehicle, which promote the regeneration of kinetic energy into electric energy; and
(7) in the cabin of the vehicle: the distribution of power sockets.

Similarly, the electric traction system for the electro-hybrid vehicle with two-way connection 2 has innovative specifics for its electric traction and its auxiliary system, wherein the auxiliary system comprises the vehicle's energy requirements not directly associated to traction. In addition to all the characteristics mentioned above for the electric traction system for electric vehicle with two-way connection 1, these specifics include:
(1) hybridization engineering of energy aboard the vehicle, which considers the use of energy storage system 4 focused on the total energy required for operating the vehicle, in a configuration characteristic of that presented in items 10 (e.iii), and (e.iv) relating to the possible types of hybrid vehicles; and
(2) in the energy converter according to efficiency 21: the presence of its intelligence 11 which, by the exchange of information and control flow with the interface for the energy converter 20, controls the operation of the embedded electric energy generators 22 to 25. This control is performed in accordance with pre-established logics, which imposes the operating condition of best energy efficiency upon the energy converter.

Therefore, generators 22 to 25 do not directly meet the transitory demand of the electric traction motor 8, nor of other load consumer systems belonging to the auxiliary system of the vehicle. This is carried out by the exchange of information and power streams, so as to satisfy the operation logics under best energy efficiency conditions, by way of the busbar 10 and its protection system and monitoring 17, which is responsible for protecting the busbar electric system (10), ensuring operation safety, and data sensing for control. The protection system 17 is composed of electrical devices and electronic telemetry circuits in real time, which operate under control of UCEPV 3 via the interface for busbar protection and monitoring system 18, in order to enable the operation of the generators 22 to 25 in stationary status, providing electric energy generation at a steady rate and ensuring greater energy efficiency of operation, lower fuel consumption and greater useful life.

If the electric energy generator 22 to 25 is composed of a motor-generator group using an internal combustion engine, the intelligence 11 associated to the energy converter 21 enables the control of the vehicle's energy stream by way of the busbar 10 and the MECU 3. This control occurs in such a way that if the embedded energy storage system is fully charged and the vehicle requires braking or deceleration, without using the conventional mechanical system (hydraulics or pneumatic, kept for safety) of vehicle braking, the energy generated in regeneration by the electric traction motor can be directed by the busbar 10 to the electric motor of the motor-generator group.

The motor-generator group, in turn, will be operating in the conventional electric motor condition, in order to provide the forced operation of the integrated internal combustion engine, dissipating excess energy under the form of heat, known as engine brake.

The excess electric energy regenerated by kinetic energy conversion, which can no longer be directed to the energy storage system 4 since it is fully charged, other dissipation options are provided in the vehicle, regardless of the type of energy generator which has on board: (i) the production and storage of compressed air on board, as described, for example, in documents PI08001587-2 or PCT/BR2009/00319; or (ii) the conversion of electric energy into thermal energy, stored in the cold source, contributing to the efficient operation of the air-conditioning system.

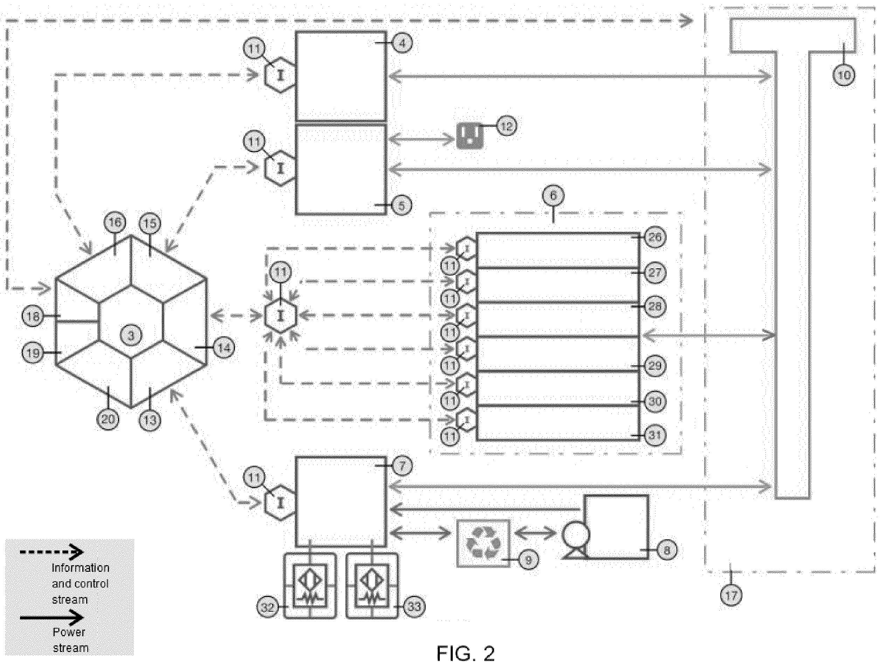

Figure 2 shows the electric traction system for electric vehicle 1 comprising the equipment shown in Figure 1, such as: the MECU 3; the energy storage system 4; the two-way charger 5; the busbar 10; and the regeneration algorithm 9; emphasis being placed on the converter combination of the auxiliary system 6.

The auxiliary system 6 includes an auxiliary converter for 24 V 26, which is an insulated high/low converter in direct current and which powers the vehicle's conventional auxiliary systems; an insulated source 24-24 Vcc 27, acting to reduce noise on the busbar having low voltage direct current and limiting interference in the converter control signals; the converter for alternating current 28, used to energize the power sockets for personal use devices in the vehicle's cabin; a converter for hydraulic steering pump 29, used to energize and control the pump motor of the vehicle's hydraulic steering system; a converter for the compressed air compressor 30, used to energize and control the air compressor motor of the vehicle's pneumatic system for driving mechanical brakes, doors, suspension and energy storage; and an air-conditioning converter 31, used to energize and control the compressor motor of the air-conditioning equipment of the vehicle.

Moreover, the electric traction system for electric vehicle 1 further comprises sensors 32 and 33 for controlling drive and drivability of the vehicle.

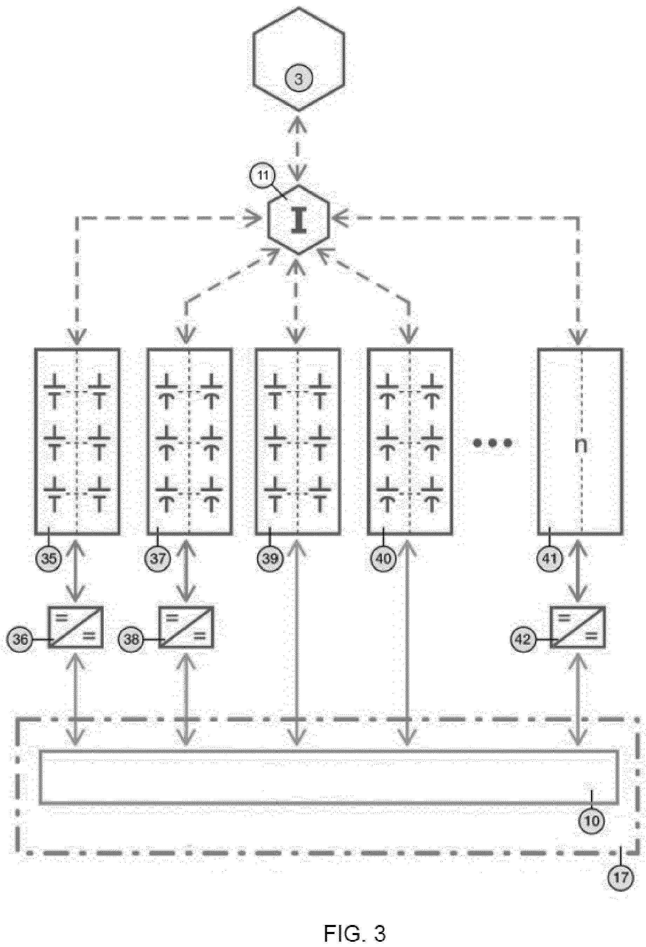

In a preferred embodiment of the electric traction system for electric 1 or electro-hybrid 2 vehicle, the embedded energy storage system 4 is configured as shown in Figure 3, that is, with two-way interaction of the information and control stream between the interface for the energy storage system 16 and the intelligence 11 of each of the energy storers used.

As seen in Figure 3, the energy storers further comprise a specific two-way converter for exchange of power stream with the busbar 10, just like between the storer 35 and its two-way converter 36, or between the storers 37 and 41 and their respective two-way converters 38 and 42, or also in the configuration wherein the energy storer does not require a two-way converter for the efficient exchange of power stream with the busbar 10, as in storers 39 and 40.

The embedded energy storers 35, 37, 39, 40 and 41 may, for example, and not limitedly, related to: traction batter banks (such as, for example, lithium ion batters or other types suitable for this traction use application, capable of absorbing or supplying power streams or of storing energy for extended periods); supercapacitor bank, with special characteristics for storage and fast supply of power peaks; electro-mechanical energy storage system, of the flywheel type; system comprised of air compressor and compressed air storage tanks, which uses electric energy for production, compacting and storage of air; system comprised of cooler and thermally-insulated recipient for production and storage of thermal energy (for example, in the form of ice); and embedded water electrolysis system for producing, compressing and storing hydrogen.

Electric energy storers 35, 37, 39, 40 and 41 may also be configured for joint operation with different types of embedded electricity generators, including fuel cell, motor-generator group, turbine, solar panel or regeneration of kinetic energy into electric energy.

The embedded energy storage system 4 requires the use of a two-way charger 5 for recharging or supplying energy via the interface 12. The two-way charger and the interface 12 have in their circuits devices also capable of opportunity electric recharging.

The converter combination of the auxiliary system 6 is preferably subdivided into electro-electronic devices 26 to 31. The auxiliary converter for 24 Vcc 26 is an insulated converter, responsible for reducing the voltage coming from the busbar 10 to 24 Vcc in order to power all the loads of the auxiliary system requiring this voltage. The insulated source 24 Vcc 27 is a conventional source, being used to power the controls of the traction inverter, with a view to minimizing noise.

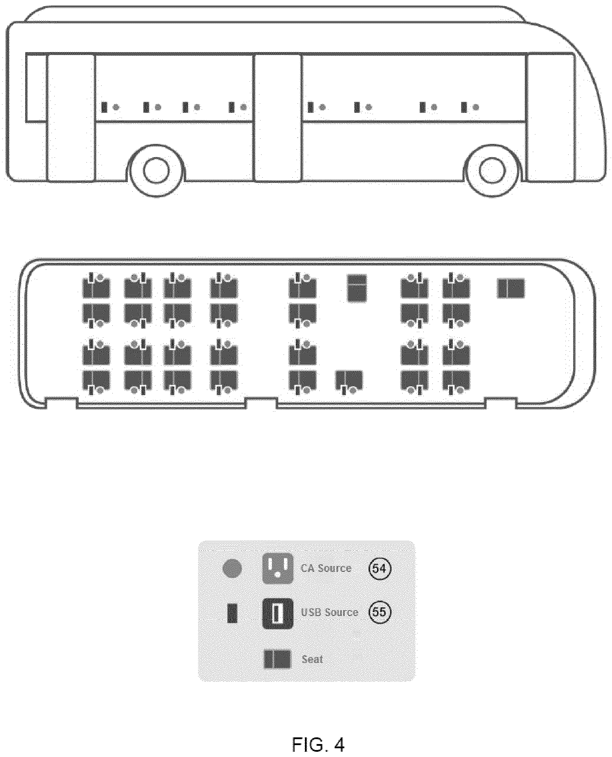

The converter for alternating current 28 is used to energize power sockets of the vehicle cabin, as schematically represented, in a non-limited fashion, in Figure 4 and provides recharging for personal devices on board.

Also components of the converter combination of the auxiliary system 6, the converter of the hydraulic pump 29, the converter of the compressed air compressor 30 and the converter of the air-conditioning compressor 31 may be conventional or specific, and may be installed and used as individual devices or be grouped in a single item of equipment.

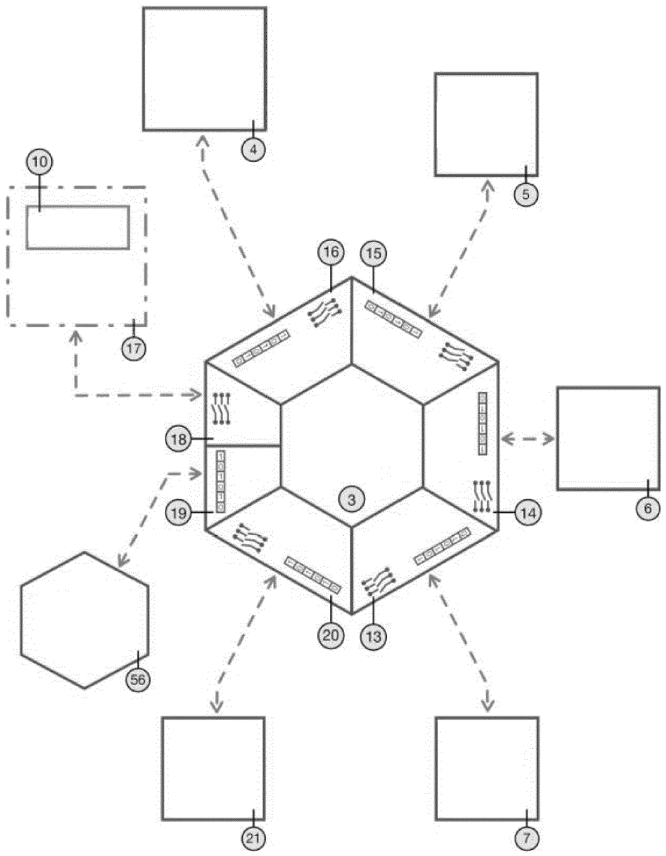

Figure 5 shows the main energy control unit (MECU) 3 in detail. The MECU 3 is responsible for the control activities, monitoring and communication of the vehicle in an integrated manner, being made up of the interfaces for traction converter 13, for converter combination of the auxiliary system 14, for two-way charger 15, for energy storage system 16, for busbar protection and monitoring system 18, man-machine 19 and for energy converter 20.

A man-machine interface 19 has a link with information streams and control with the man-machine device 56, which is the system that ensures internal and external communication of information of the vehicle with humans. This includes the use of a device with tablet-type touch-sensitive screen for drive, control and data retrieval of the vehicle. This device provides access to the Internet inside the vehicle in a wireless network, the transmission and reception of control and monitoring data to remotely assist the operation and enabling safety actions and preventive and corrective maintenance at a distance, in real time.

Additionally, the MECU 3 is a high capacity microprocessed electronic circuit, dedicated, specific for vehicular use for electric vehicles or electro-hybrid vehicles, having, for example, the electric traction systems for electric vehicle with two-way connection 1 or for electro-hybrid vehicle with two-way connection 2, with capacity to meet the vehicle use requirements relating to mechanical vibration and electromagnetic interference.

The MECU 3 has protection capacity against weather, such as high moisture content, temperature and presence of dust, with a casing resistant to gases, fire and explosion.

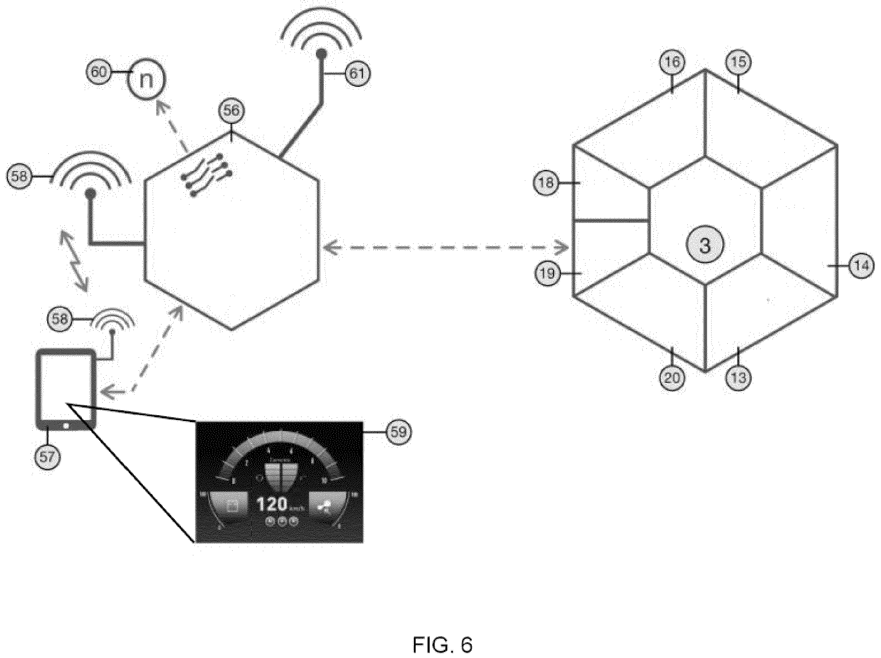

Figure 6 shows additional details of the man-machine interface 19 establishing information streams and control with the man-machine device 56.

The device 56 is a subsystem of the MECU 3, responsible for ensuring wireless communication, internal and external to the vehicle, including a device with a touch-sensitive screen like a tablet 57, which has omnidirectional antenna 58 and a screen 59 with a configuration of the type, but not limited to, that presented in Figure 6.

As an example, the operation screen 59 may display, among other possibilities, indicators for load status of the embedded energy storage system, for remaining level of liquid or gas fuels, when used, of the instantaneous power supplied to the traction system and currents on the electric busbar with direct current under energy or regeneration supply conditions, as well as forward, neutral or reverse gear.

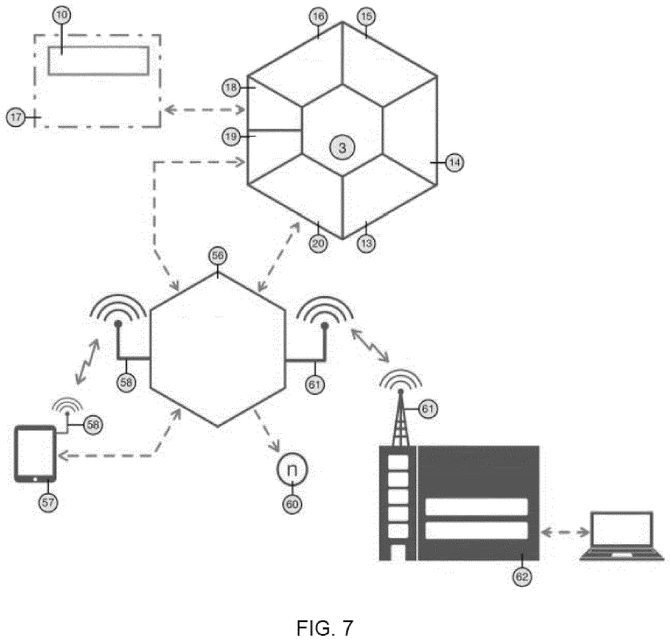

The device also 56 provides the exchange of analog control signals with conventional devices of the vehicle, such as air-conditioning, radio, television, video, microphone, among others, through the communication port 60, and the external communication to the vehicle through the omnidirectional antenna 61, as shown in Figure 7, which illustrates the communication with a central control, monitoring and remote servicing in real time (CCMMR) 62.

The electro-hybrid vehicle concept of the present invention presupposes a strategy of control that makes use of an energy converter according to efficiency 21.

The converter 21 emphasizes the use of electric energy generating equipment under conditions of best energy efficiency instead of placing them at the disposal of the driver or the vehicle itself to meet the transient requirements for power and energy associated to the specific displacement mode of the vehicle.

The MECU 3 determines and directs the power and energy streams through the busbar 10 to the different consumer and storer subsystems on board such that the embedded electric energy generator is preserved so that it does not attend any situations of direct requirement of these load consumer subsystems, operating at approximately constant power to satisfy the operating conditions of best energy efficiency. This determination from the MECU 3 is based on the instantaneous operating conditions of the vehicle and of the real-time information from the following subsystems of the vehicle: embedded energy storage system 4; converter combination of the auxiliary system 6; traction converter 7; electric traction motor 8; algorithm 9; electric busbar and busbar protection and monitoring system 17. This real-time information is stored in the MECU 3 itself by way of adaptive control.

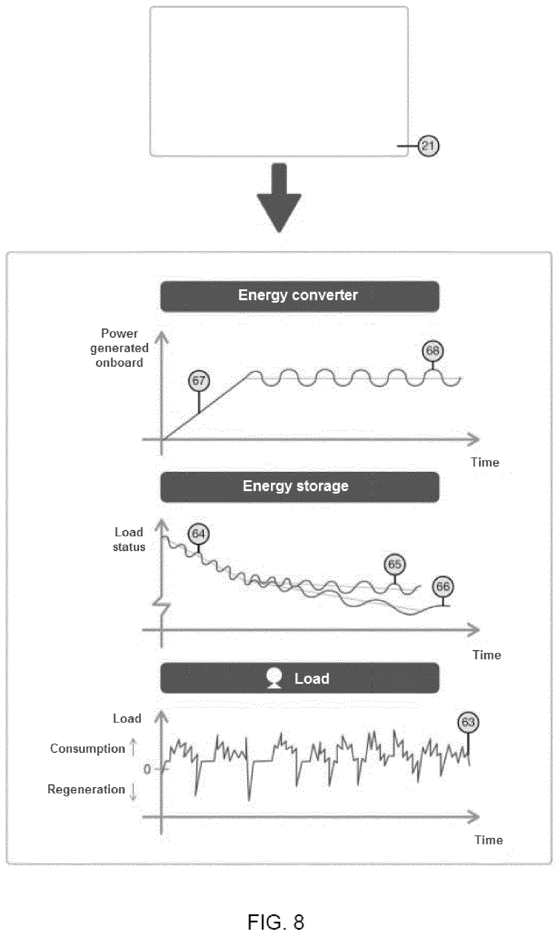

The control is performed through communication with the energy converter according to efficiency 21, which establishes the operating mode of the generators existing on board 22 to 25, in terms of the power generated on board, of the load status of the energy storage system and in relation to the required load, as schematically described in Figure 8.

Taking as example the schematic pattern of load consumption of the vehicle 63, the load decay status of the storage system allows continuous decay 64 followed by cyclical stabilization of this load status 65 or controlled decay 66. This is performed under the control of the MECU 3 which, based on the load status of the embedded energy storage system 4, triggers the generation of embedded energy at constant power, for the required duration, calculated based on the real average energy consumption and on the instantaneous load status of the embedded energy storage system 4.

The behavior of the load decay status of the embedded energy storage system as described is ensured by an operating pattern of the embedded energy generator as per figure 8, which shows the start of operation on an increasing power ramp 67 to achieve and maintain at a pre-set power level 68.

This power level is selected based on the operation limit conditions and on best energy efficiency furnished by the manufacturer of the energy generator, and also by the hybridization engineering of embedded energy, being kept approximately constant during the operation as per the converter control 21, managed by the adaptive control of the MECU 3.

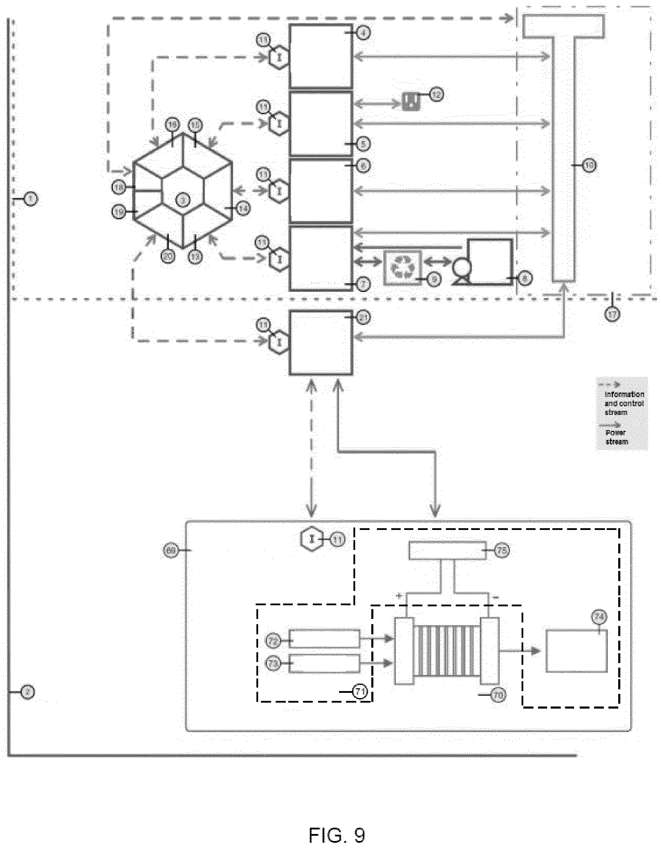

The operating mode of the electric traction system 5 for electro-hybrid vehicle with two-way connection 2 enables different vehicle configurations with the use of fuel cells as electric embedded energy generator, as shown in Figure 9.

The embedded generator of the fuel cell type 69 is composed, as exemplified in a non-limited manner, of: stacking 70; plant balance 71, which is composed at least by fuel supply control units 72 and air or oxygen 73; control unit for discarding and/or recycling of reaction products and heat generated 74; and adjustment system of the electric energy generated 75. These specific components and their functions are defined by each supplier or fuel cell manufacturer.

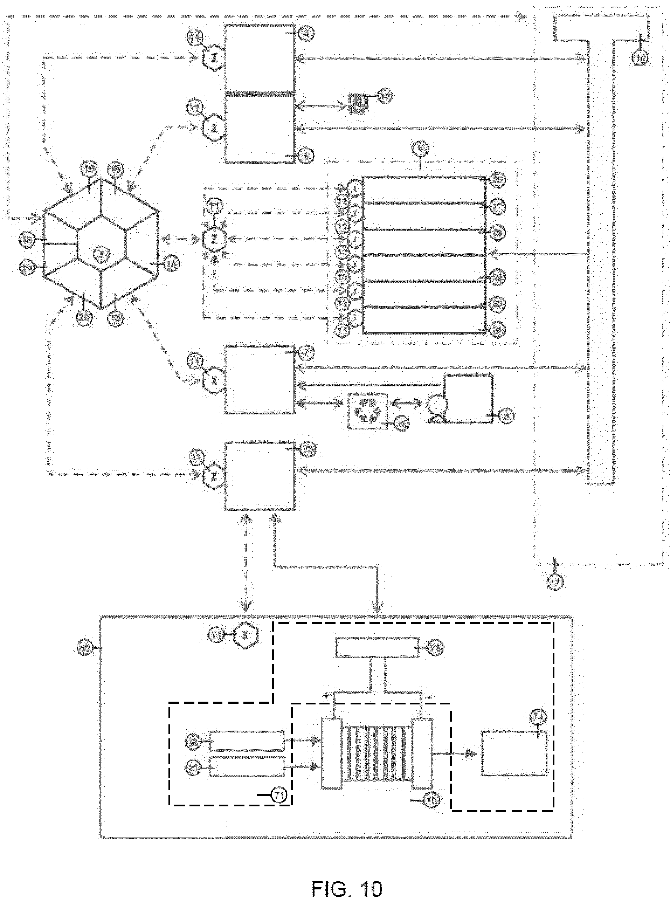

Figure 10 shows the use of the equipment that is part of the system 2, including the energy converter according to efficiency specific to fuel cells 76.

The subsystems relating to this equipment are identical to those previously described for figure 2 and include: the equipment previously mentioned in Figure 1, such as the MECU 3; the energy storage system 4; the two-way charger 5; the busbar 10; the regeneration algorithm 9; emphasis is placed upon the converter combination of the auxiliary system 6, which includes the following devices: auxiliary converter for 24 V 26, which is an insulated direct high/low current converter and which powers the vehicle's conventional auxiliary systems; insulated source 24-24 Vcc 27, acting to reduce noise in the busbar having low voltage direct current and limiting interference in the converter control signals; converter for alternating current 28, used to energize the power sockets for personal use devices in the vehicle's cabin; converter for hydraulic steering pump 29, used to energize and control the pump motor of the vehicle's hydraulic steering system; converter for the compressed air compressor 30, used to energize and control the air compressor motor of the vehicle's pneumatic system for driving mechanical brakes, doors, suspension and energy storage; and air-conditioning converter 31, used to energize and control the compressor motor of the vehicle's air-conditioning equipment. Lastly, it further comprises sensors 32 and 33 to control the drive and drivability of the vehicle.

In a hybrid configuration with generator of the energy converter type according to efficiency with fuel cell (CESE-PaC) 69, a fuel cell is used, powered by hydrogen or other fuels, stored on board and oxygen from the air as embedded energy converter.

Stacking 70 has its own plant balance 71, which controls and monitors its operation, administrating fuel 72 and air 73, with disposal of the reaction products 74 and electrical current collection, which powers the load 75 and has power stream with the energy converter for generator with fuel cell 76. The intelligence 11 embedded in the generator 69 has an information stream to the converter 76.

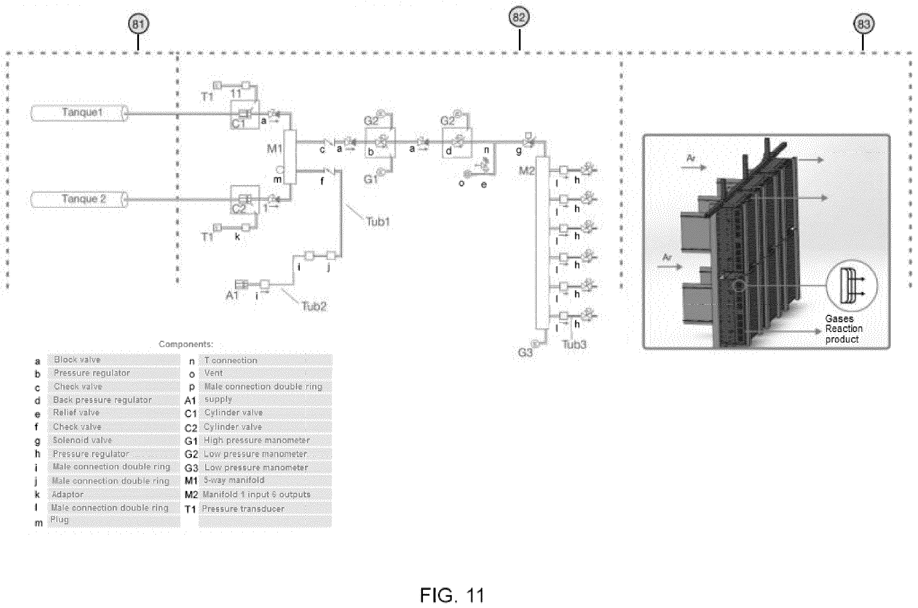

The physical arrangement of the embedded subsystems for storage, distribution and energy use of hydrogen or other fuels for system for electro-hybrid vehicle with two-way connection 2, in the configuration wherein the embedded electric energy generator is cell fuel, is schematically represented in a non-limited manner in Figure 11. Said subsystems comprise hydrogen storage tanks 81, hydrogen distribution system 82 at high and low pressures and energy use of the hydrogen 83 in the fuel cell.

In a preferred embodiment, two hydrogen storage tanks are used, directly connected to a hydrogen distribution system at high and low pressures.

As shown in Figure 11, the hydrogen distribution system comprises valves, pressure regulators, connectors, pressure gauges, pressure transducers, tubing, including tubing for distribution of individual ducts to each fuel cell. The use of hydrogen as fuel in a fuel cell is exemplary. The system also has other specific configurations that make use of other fuels, with or without prior reform, such as: ethanol, methanol, natural gas, biogases, gas rich in methane and other hydrocarbons, diesel, gasoline, among others.

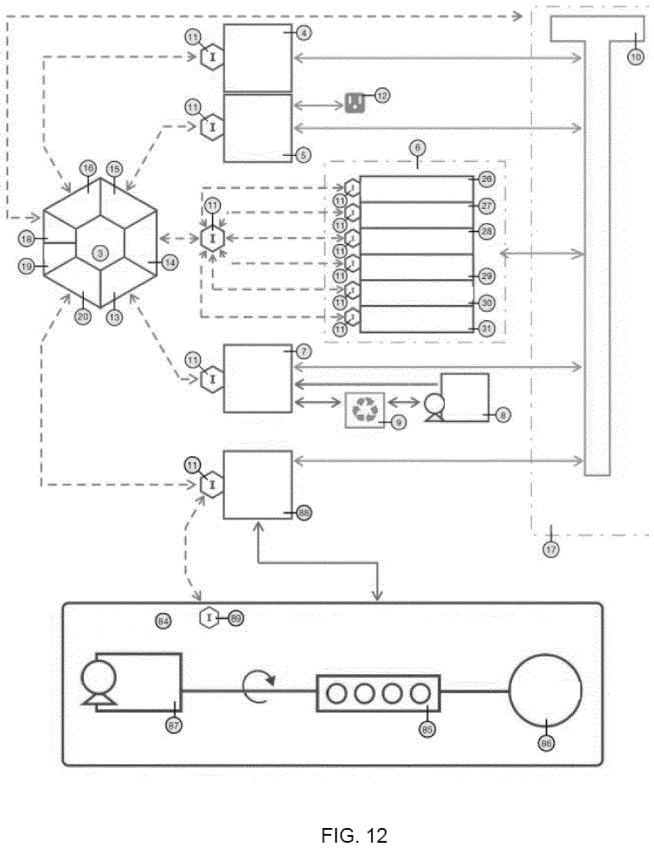

Figure 12 shows an embodiment of the system for electro-hybrid vehicle with two-way connection 2 which makes use of generator of the energy converter type according to efficiency with motor-generator group (CESE-GMG) 84.

The generator 84 comprises an internal combustion engine 85 powered by fuel 86 to drive the electric motor-generator 87. This system is controlled by the energy converter for generator with motor-generator group 88 which is commanded by the interface for energy converter 20.

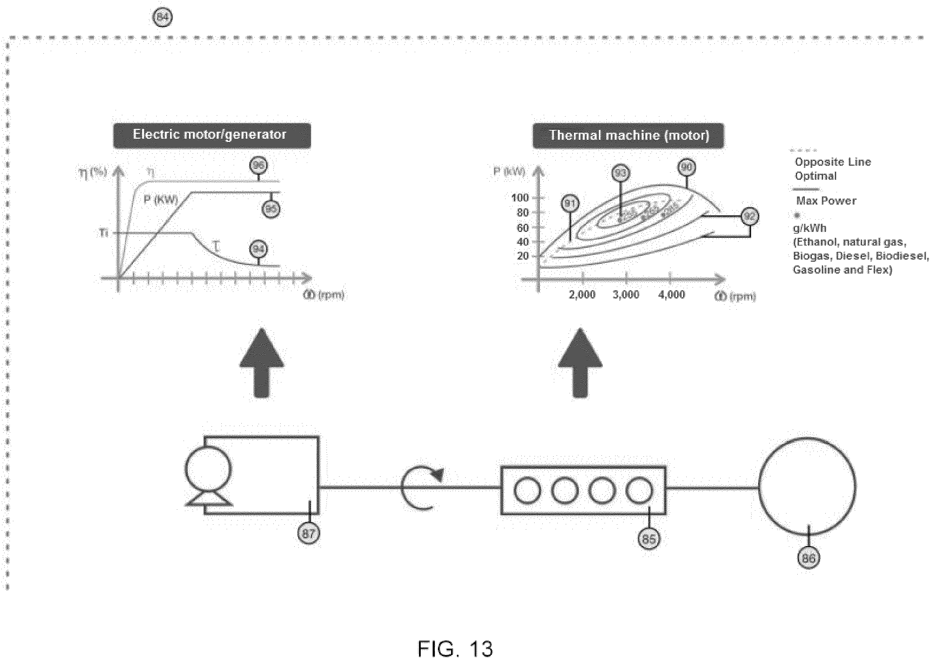

The strategy for operating the generator 84, shown in Figure 13, is such that although the internal combustion engine 85 can operate throughout its maximum power curve 90, it is controlled so as to operate through its best energy efficiency curve 91.

The curve 91 is composed by additional isoefficiency curves 92, which define an operating region in terms of power generated with specific torque, establishing the best energy efficiency region 93. This best energy efficiency region 93 is established by the condition of lowest specific fuel consumption of the internal combustion engine 85 measured, for example, in g/kWh in prior operating analysis of this thermal machine at constant power. A specific region of best energy efficiency is characteristic for each type of fuel used.

The region 93 is used to impose the operating conditions, such as the nominal rotating speed of the electric motor-generator 87 such that it operates in the flat region of its torque curve 94, at preset power 95, following the best efficiency curve 96 of the electric motor-generator 87, under the command of the MECU (3), which implements pre-established operation logics.

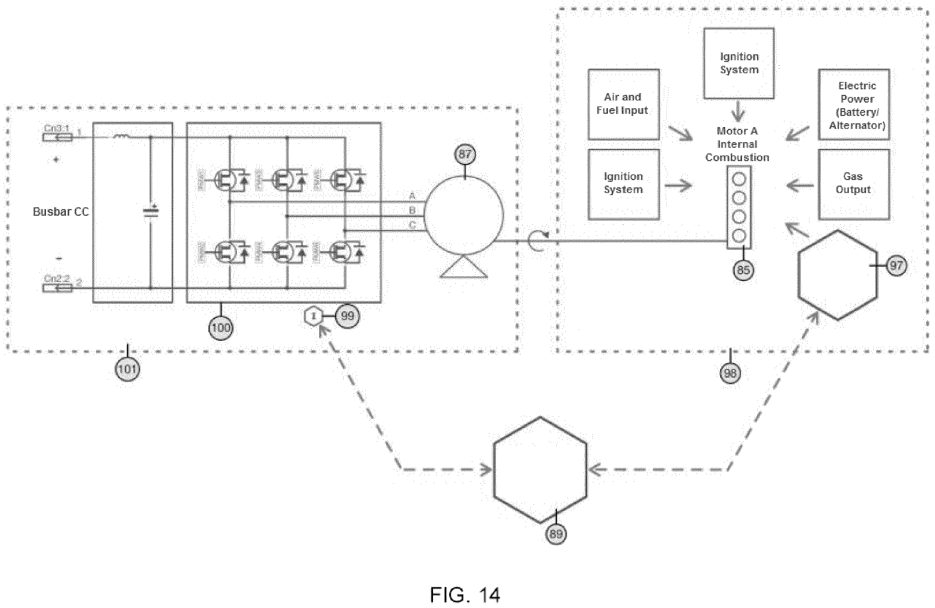

Figure 14 schematically shows the smart control 89 of the generator 84, which is a unit responsible for the information and control stream between the control module of the internal combustion engine 97 of the internal combustion unit 98 and the control module 99 of the converter of the three-phase motor-generator 100 of the electric unit 101. The smart control of the generator 89 performs that communication between the internal combustion unit 98 and the electrical unit 101, ensuring the control strategy established in Figure 13.

The system for electro-hybrid vehicle with two-way connection 2 which uses generator of the energy converter type according to efficiency 84 may present a plurality of configurations in terms of the fuel which powers the internal combustion engine 85 of the generator 84.

The fuel may be any fuel that can be used to power an internal combustion engine such as, for example, ethanol, natural gas, diesel, biodiesel gasoline and methanol. The internal combustion engine may also be of the flex type, that is, powered by more than one fuel.

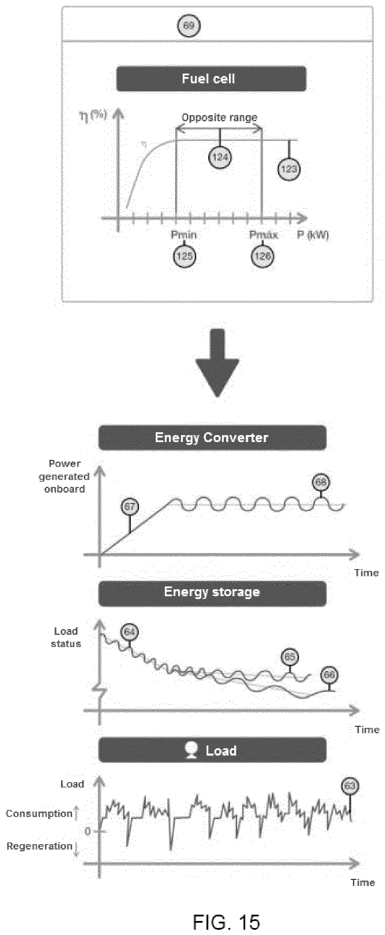

In particular, figure 15 shows a control strategy for the use of an energy converter according to efficiency with fuel cell as embedded electric generator 69, which determines the operation of the fuel cell at constant efficiency level 123 in an operating range at constant power 124, which is determined by the MECU 3, between the minimum 125 and maximum 126 powers of the fuel cell. This control strategy is implemented by the MECU 3 which, based on the load status of the embedded energy storage system 4, triggers the generation of embedded energy at constant power, for the required duration, calculated based on the real average energy consumption and on the instantaneous load status of the embedded energy storage system 4.

The minimum 125 and maximum 126 power levels are determined based on the operation limit conditions and on best energy efficiency supplied by the energy generator manufacturer, as well as by the hybridization engineering of embedded energy, being kept approximately constant during the operation as per converter control 21, managed by adaptive control of the MECU 3.

The control strategy provides a fuel cell operation mode to consume less fuel and ensure a longer useful life. This is achieved by setting the logics control so that it is reduced, for a period of work, the number of times in which the fuel cell is switched on and off, and also imposing its operation to generate electricity at constant power, which is determined based on the characteristics supplied by the manufacturer in relation to these minimum and maximum powers of efficient operation of the equipment.

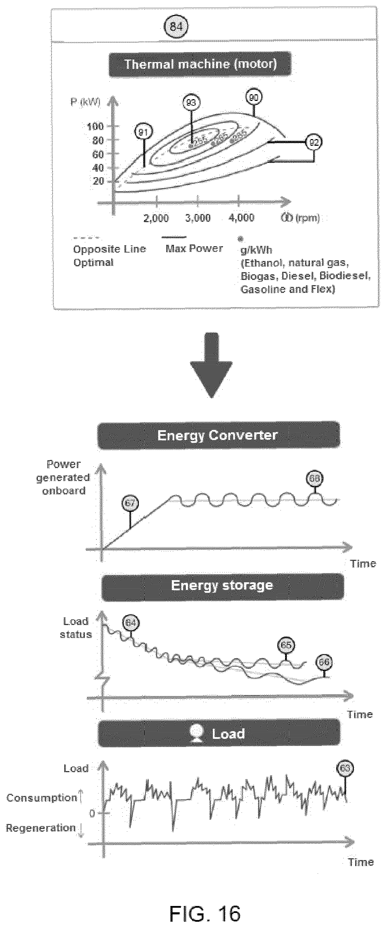

Figure 16 shows a control strategy for using the generator of the energy converter type according to efficiency with motor-generator group 84 which determines the operation of the motor-generator group always in the condition of best energy efficiency at approximately constant power, so as to ensure less fuel consumption, lower emissions and a longer useful life of the generator 84. Similarly to that described with respect to figure 15, this control strategy is performed by the MECU 3 which, based on the load status of the embedded energy storage system 4, triggers the generation of embedded energy at constant power, for the required duration, calculated based on the real average energy consumption and on the instantaneous load status of the embedded energy storage system 4.

In a preferred embodiment, the electric machine used in the motor-generator group 84 relates to an asynchronous machine of the conventional induction motor type, operating as a generator.

Thus, the MECU 3, through its interface for energy converter 20, determines the control intelligence of the converter 89 the power required for vehicle operation. This control intelligence of the converter 89 establishes the operating parameters of the thermal machine - internal combustion engine 85 - so it operates in the condition of best energy efficiency 91.

Additionally, it also controls the operating mode of the electric machine - asynchronous motor 87 - so it works under conditions of voltage and frequency that ensures operation in the generation quadrant of electric energy for rotation of the axis imposed.

Accordingly, the control intelligence of the converter 89 uses a conventional, asynchronous electric motor to operate as electric energy generator. Throughout the power range allowed by the electric generator 87, the control intelligence of the converter 89 operates the internal combustion engine 85, causing it to follow its best operating efficiency curve 91.

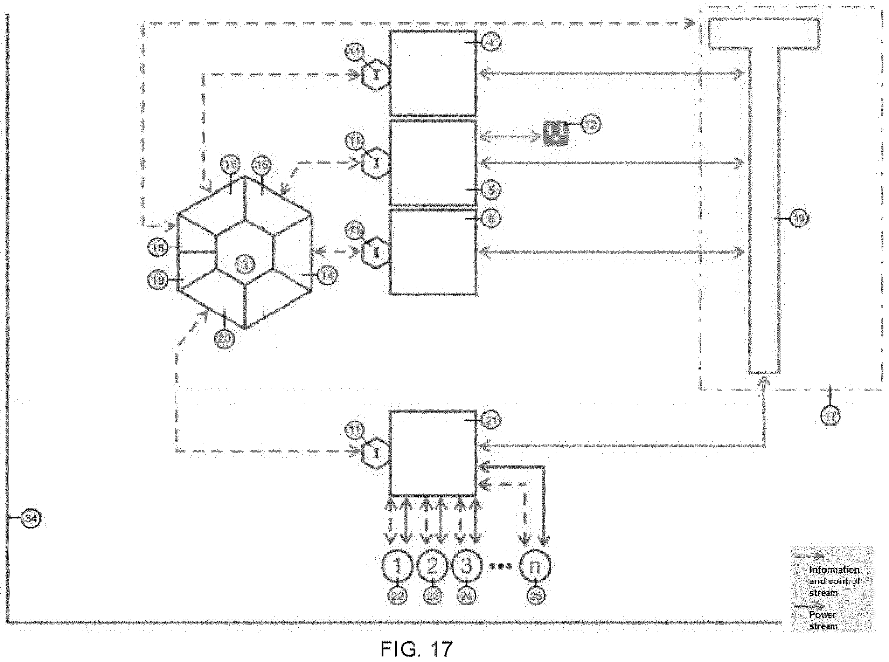

A smart energy management system for energy generator 34 with two-way connection to the mains and use of an energy converter according to efficiency 21 is shown in Figure 17. The system 34 is for generating electric energy in a non-embedded mode and comprises the following components: main energy control unit (MECU) 3, energy storage system 4, two-way charger 5, converter combination of the auxiliary system 6, electric busbar 10, busbar protection and monitoring system 17, energy converter according to efficiency 21 and generators 22, 23, 24, 25.

As can be seen, the smart energy management system for energy generator 34 corresponds to the electric traction system for electro-hybrid vehicle with two-way connection 2 with the devices related to the traction of the vehicle - traction converter 7, electric traction motor 8, algorithm 9 and interface for traction converter 13 - being suppressed.

Additionally, some of the subsystems of the converter combination of the auxiliary system 6 are not part of the system 34 either. These are: hydraulic pump converter 29, air compressor converter 30 and air-conditioning converter 31. All the other components of the system 34 operate in a similar way to the corresponding components of the electric traction system for electro-hybrid vehicle with two-way connection 2, described above.

Having described examples of preferred embodiments, it should be understood that the scope of the present invention encompasses other potential variations, being limited solely by the content of the accompanying claims, possible equivalents included therein.

## Claims

1. A smart energy management system for electric vehicle with two-way connection (1) comprising:
an electric traction motor (8) connected to a traction converter (7) to traction the electric vehicle;
a traction converter (7) connected to drive control and drivability sensors (32, 33) of the electric vehicle, which controls the electric traction motor (8) by an algorithm (9) for regenerating kinetic energy into electric energy;
an embedded energy storage system (4) for storing the electric energy on-board the electric vehicle;
a two-way charger (5) which, by way of an interface (12), recharges the embedded electric energy storage system (4) and supplies electric energy to a network or non-embedded energy consumer system;
a converter combination of the auxiliary system (6) comprising a plurality of converters of the auxiliary system of the electric vehicle; and
an electric busbar (10) that performs electrical-electronic connections with: the embedded energy storage system (4), the two-way charger (5), the converter combination of the auxiliary system (6) and the traction converter (7);
wherein the electric busbar (10) has a busbar protection and monitoring system (17) which is responsible for protecting the busbar electric system (10), ensuring operation safety, and data sensing for control;
**characterized by** further comprising:
a main energy control unit (MECU) (3) to control, monitor, retrieve data, perform communication and manage the energy on board the electric vehicle, wherein:
the MECU (3) provides stream of information and control between:
(a) the traction converter (7) and an interface (13) for the traction converter (7);
(b) the converter combination of the auxiliary system (6) and an interface (14) for the converter combination of the auxiliary system (6);
(c) the two-way charger (5) and an interface (15) for the two-way charger (5);
(d) the energy storage system (5 4) and an interface (16) for the energy storage system (4);
(e) a busbar protection and monitoring system (17) and an interface (18) for the busbar protection and monitoring system (17); and
(f) devices for drivability of the electric vehicle and internal and external communications of the electric vehicle and a man-machine interface (19); and wherein the interface (13), an intelligence (11) of the traction converter (7) and an algorithm (9) provide emphasis on the regeneration of kinetic energy into electric energy, ensuring optimized stream of power generated by the electric traction motor (8) and managing the load status of the energy storage system (4), via the interface (16).

2. The system as claimed in claim 1, characterized wherein the MECU (3) provides the stream of information and control by smart means (11), embedded in the energy storage system (4), in the two-way charger (5), in the converter combination of the auxiliary system (6), in the traction converter (7), and in a man-machine device (56).

3. The system as claimed in claim 1, characterized wherein the MECU (3) is a high capacity microprocessed electronic circuit for vehicular use, able to withstand mechanical vibration, electro-magnetic interference and weather.

4. The system as claimed in claim 1, characterized wherein the MECU (3) comprises control algorithms for managing the embedded energy, which determines the magnitude of the power generated on board on an on-going basis, the generation time and the load status of the energy storage system (4), in order to control the generation of embedded energy.

5. The system as claimed in claim 1, characterized wherein the embedded energy storage system (4), the two-way charger (5), the converter combination of the auxiliary system (6), and the traction converter (7) have a two-way power stream with the electric busbar (10).

6. The system as claimed in claim 1, characterized wherein the embedded energy storage system (4) comprises at least an embedded energy storer (35, 37, 39, 40, 10 41) incorporating a specific two-way converter (36, 38, 42) for exchange of power stream with the busbar (10).

7. The system as claimed in claim 6, characterized wherein at least an embedded energy storer (35, 37, 39, 40, 41) is selected from the group comprising: traction battery bank, supercapacitor bank, flywheel-type electro-mechanical energy storage system, system comprised of air compressor and compressed air storage tanks, system comprised of cooler and thermally-insulated recipient, and embedded water electrolysis system for producing, compressing and storing hydrogen.

8. The system as claimed in claim 1, characterized wherein the traction converter (7), with the aid of sensors (32, 33) and the algorithm (9), provides the electric traction motor operation (8) as electric energy generator during braking processes or deceleration of the vehicle, in order to regenerate kinetic energy into electric energy.

9. The system as claimed in claim 8, characterized wherein the electric energy generated in the regeneration process is used to charge at least an embedded energy storer (35, 37, 39, 40, 41).

10. The system as claimed in claim 1, characterized wherein intelligence (11) uses the interface for traction converter (13) and the busbar (10) to ensure the stream of energy required by the electric traction motor (8) in order to meet the requirements of torque and power imposed by the use of the vehicle, the MECU (3) performing an adaptive control to optimize energy expenditure in future uses of the same route by the vehicle.

11. The system as claimed in claim 1, characterized wherein the intelligence (11), by the algorithm (9) manages the joint operation of the interfaces for the traction converter (13) and for the energy storage system (16) to maximize electric energy absorption in the energy storage system (4), wherein:
the energy comes from the regeneration of kinetic energy into electric energy performed by the electric traction motor (8) operating as electric energy generator; and the maximization of electric energy absorption is ensured by the MECU (3), allowing the busbar (10) the immediate use of a portion of electric energy regenerated to supply the load demands of the auxiliary system and performing the adaptive control by monitoring the load status of the energy storage system (4), based on historical consumption.

12. The system as claimed in claim 1, characterized wherein the man-machine interface (19) establishes information streams and control with a device man-machine (56) to perform wireless communication, internal and external to the vehicle.

13. The system as claimed in claim 12, characterized wherein a man-machine interface (19), by way of the man-machine device (56), connects to a display device (57) that provides the following tasks:
starting and stopping the vehicle;
recognizing the driver;
starting and stopping devices of the vehicle's traction and auxiliary systems;
providing dynamic operation information of the vehicle (such as load status of the energy storage system (4), speed and geographical position of the vehicle by GPS, instantaneous power expended in the vehicle, currents of consumption and regeneration of kinetic energy into electric energy and screen to adjust variables and maintenance; internet access inside the vehicle; and transmitting and receiving control and monitoring data to/from a central control, monitoring and remote maintenance (62) which remotely advises the operation and enables security and preventive and corrective maintenance actions to be taken at a distance, in real time.

14. The system as claimed in claim 13, characterized wherein the display device (57) is a device with a touch-sensitive screen.

15. The system as claimed in claim 1, characterized wherein the two-way charger (5):
transfers conventional mains energy via the interface (12) to the vehicle, recharging the embedded energy storage system (4); and transfers electric energy from the vehicle to an external load, providing energy to a non-embedded external consumer.

16. The system as claimed in claim 15, characterized wherein the interface (12) provides a 'fast charge' recharging system, wherein the embedded electric energy storage system (4) is partially recharged through a connection with or without physical electrical contact, at specific temporary stopping sites along the vehicle's path.

17. The system as claimed in claim 1, characterized wherein the converter combination of the auxiliary system (6) comprises:
an auxiliary converter for 24 V (26), which is an insulated direct high/low current converter and which powers the vehicle's conventional auxiliary systems;
an insulated source 24-24 Vcc (27) that acts to reduce noise on the busbar (10) having low voltage direct current and limits interference in the converter control signals (26, 28, 29, 30, 31);
a converter for alternating current (28) that energizes the power sockets for personal use devices in the vehicle's cabin;
a converter for hydraulic steering pump (29) that energizes and controls the pump motor of the vehicle's hydraulic steering system;
a converter for the compressed air compressor (30) that energizes and controls the air compressor motor of the vehicle's pneumatic system for driving mechanical brakes, doors and suspension; and an air-conditioning converter (31) that energizes and controls the compressor motor of the vehicle's air-conditioning equipment;
wherein the source (27) and the converters (26, 28, 29, 30, 31) have smart means embedded (11), ensuring the efficient use of energy.

18. A smart energy management system for electro-hybrid vehicle with two-way connection (2) comprising:
the smart energy management system for electric vehicle with two-way connection (1) as defined in any of claims 1 to 17;
at least an embedded electric energy generator (22, 23, 24, 25) for generating electric energy in accordance with the system's consumption requirements (2);
**characterized by** further comprising:
an energy converter (21) for controlling the operation of at least an embedded electric energy generator (22, 23, 24, 25) in stationary status based on the exchange of information stream and control between an intelligence (11) and an interface to energy converter (20), wherein the use of the energy storage system (4) is predominant in relation to the total energy required for operating the system for electro-hybrid vehicle with two-way connection (2), representing over 50% of the total embedded energy.

19. The system as claimed in claim 18, characterized wherein at least an embedded energy storer (35, 37, 39, 40, 41) is configured to operate jointly with at least an embedded electric energy generator (22, 23, 24, 25), wherein at least an embedded electric energy generator (22, 23) is selected from the group comprising a fuel cell, a motor-generator group;
a turbine and a solar panel, besides regenerating kinetic energy into electric energy.

20. The system as claimed in claim 19, characterized wherein the MECU (3), based on the instantaneous operating conditions of the vehicle and on the real-time information from the subsystems (4, 6, 7, 8, 9, 10, 17) of the vehicle, provides the use of the embedded energy-generating equipment (22, 23, 24, 25) in approximately constant power.

21. The system as claimed in claim 20, characterized wherein the instantaneous operating conditions of the vehicle and the real-time information from the subsystems (4, 6, 7, 8, 9, 10, 17) of the vehicle are stored in the MECU (3) by means of an adaptive control.

22. The system as claimed in claim 21, characterized wherein the adaptive control is performed by communication of the MECU (3) with the converter (21), which establishes the operating mode of the energy generators (22, 23, 24, 25) in terms of the power generated on board, of the load status of the energy storage system (4) and of the load required.

23. The system as claimed in claim 18, **characterized in that** when the energy storage system (4) is fully charged, the energy generated in the regeneration process by the electric traction motor (8) is directed via the busbar (10) to:
powering load demands of the auxiliary system;
powering the electric motor (87) of the motor-generator group;
producing and storing compressed air on board; and
converting electric energy into thermal energy, which is stored in the cold source and contributes to the efficient operation of the vehicle's air-conditioning system.

24. The system as claimed in claim 18, characterized wherein:
at least an embedded electric energy generator (22, 23, 24, 25) is a generator (69) comprising a fuel cell; and the energy converter is a specific converter for generator with fuel cells (76), commanded by the MECU (3) via the interface (20) for managing the generator (69) by smart means (11), keeping the fuel cell operating in an operating range at constant power (124), wherein a range (124) is at a constant level of efficiency (123) and is determined by the MECU (3) between the minimum (125) and maximum (126) powers of the fuel cell; and
wherein the fuel cell (69) is powered by a fuel stored on board, among: hydrogen (72), ethanol, methanol, natural gas, biogases, gas rich in methane and other hydrocarbons, diesel and gasoline.

25. The system as claimed in claim 18, characterized wherein:
at least an embedded electric energy generator (22, 23, 24, 25) is a generator (84) comprising an internal combustion engine (85), powered by fuel (86) to drive the electric motor-generator (87);
the energy converter is a specific converter for generator with motor-generator group (88), commanded by the MECU (3) via the interface (20) for managing the generator (84) by the smart means (11, 89), maintaining an internal combustion engine (85) operating through its best energy efficiency curve (91), which has isoefficiency curves (92), which define the best energy efficiency region (93) of the internal combustion engine (85); wherein:
knowledge of the best energy efficiency region (93) is used to determine the nominal rotating speed of the electric motor-generator (87) so that it operates in the flat region of its torque curve (94), with a preset power (95), following the best efficiency curve (96) of the electric motor-generator (87), under the command of the MECU (3), which implements pre-established operation logics; and wherein the fuel (86) which powers the internal combustion engine (85) is selected from the group comprising: ethanol, natural gas, biogas, diesel, biodiesel, gasoline and methanol and combinations thereof.

26. The system as claimed in claim 25, characterized wherein the electric motor-generator (87) is an asynchronous motor of the conventional induction motor type which operates as a generator.

27. A smart energy management system for an energy generator (34) comprising:
an embedded energy storage system (4) for storing the electric energy on board the system (34);
a two-way charger (5) which, via an interface (12), recharges the embedded electric energy storage system (4) and supplies electric energy to at least one of a network and an energy consumer system;
a converter combination of the auxiliary system (6) comprising a plurality of converters of the auxiliary system of the system (34); and
an electric busbar (10) that performs electrical-electronic connections with: the embedded energy storage system (4), the two-way charger (5), the converter combination of the auxiliary system (6) and an energy converter (21, 76, 88);
wherein the electric busbar (10) has a busbar protection and monitoring system (17), which is responsible for protecting the busbar electric system (10), ensuring operation safety, and data sensing for control;
**characterized by** further comprising:
a main energy control unit (MECU) (3) to control, monitor, retrieve data, perform communication and manage the energy on board the system (34), wherein:
the MECU (3) provides a stream of information and control between:
(a) the converter combination of the auxiliary system (6) and an interface (14) for the converter combination of the auxiliary system (6);
(b) the two-way charger (5) and an interface (15) for the two-way charger (5);
(c) the energy storage system (4) and an interface (16) for the energy storage system (4);
(d) a busbar protection and monitoring system (17) and an interface (18) for the busbar protection and monitoring system (17); and
(e) devices for internal and external communications to the system (34) and a man-machine interface (19).

28. Method for managing energy in a smart energy management system (2, 34), comprising the steps of:
monitoring, by the MECU (3), the instantaneous operating conditions of the system (2, 34) and the real-time information of the following subsystems: embedded energy storage system (4), converter combination of the auxiliary system (6), electric busbar (10), busbar protection and monitoring system (17), and energy converter (21, 76, 88);
storing the real-time information on the MECU (3) through adaptive control, performed by the MECU (3) by monitoring the load status of the energy storage system (4), based on historical consumption;
**characterized by** further comprising the step of:
determining, through the MECU (3) and based on information stored therein, the power and energy streams through the busbar (10) to the different energy consumer subsystems and storers on board the system (2, 34), in order to prevent an electric energy generator (22, 23, 24, 25, 69, 84) from attending to situations of direct demands from the energy consumer subsystems, operating under approximately constant power to satisfy the operating conditions of best energy efficiency of the generator (22, 23, 24, 25, 69, 84).

29. The method as claimed in claim 28, characterized wherein the step of monitoring further comprises monitoring the instantaneous operating conditions of the system (2) and the real-time information on the traction converter (7), on the electric traction motor (8) and on the algorithm (9).

30. Method for controlling the operation of an energy generator (22, 23, 24, 25, 69, 84) comprising the steps of:
detecting, by a main energy control unit (MECU) (3), and based on the load consumption pattern (63) of a consumer subsystem, at least one among the load decay status of the storage system (4) continuously (64) followed by cyclic stabilization of this load status (65) and the controlled decay (66); and
**characterized by** further comprising the step of:
providing, through an energy converter operating in conditions of best energy efficiency (21, 76, 88), that the energy generator (22, 23, 24, 25, 69, 84) begins the operation on an increasing power ramp (67) to achieve and remain at a pre-established power level (68), wherein this level is kept approximately constant and wherein the operation has a duration that is calculated based on the real average energy consumption and on the instantaneous load status of the embedded energy storage system (4).

31. The method as claimed in claim 30, characterized wherein the energy generator (22, 23, 24, 25, 69, 84) is a generator (69) comprising a fuel cell.

32. The method as claimed in claim 31, characterized wherein the step of providing further comprises determining that the fuel cell operates at a constant efficiency level (123) within an operating range at constant power (124), which is determined by the MECU (3) between the minimum (125) and maximum (126) power of the fuel cell.

33. The method as claimed in claim 30, characterized wherein the energy generator (22, 23, 24, 25, 69, 84) comprises an internal combustion engine (85).

34. The method as claimed in claim 33, characterized wherein the step of providing further comprises:
determining that the internal combustion engine (85) operates in its best energy efficiency curve (91);
defining, by the MECU (3), which implements pre-established operation logics, based on the isoefficiency curves (92), the best energy efficiency curve (91) of the internal combustion engine (85), and the best energy efficiency region (93) of the internal combustion engine (85), determining, based on the region (93), that the electric motor-generator (87) operates in the flat region of its torque curve (94), with a preset power (95), following the best efficiency curve (96) of the electric motor-generator (87).
